Europäisches Patentamt

European Patent Office

Office européen des brevets

(19)

(11) Numéro de publication : **0 533 540 A1**

## (12) DEMANDE DE BREVET EUROPEEN

(21) Numéro de dépôt : **92402490.4**

(51) Int. Cl.$^5$ : **G06G 7/60**

(22) Date de dépôt : **11.09.92**

(30) Priorité : **20.09.91 FR 9111612**

(43) Date de publication de la demande :
**24.03.93 Bulletin 93/12**

(84) Etats contractants désignés :
**DE ES GB IT**

(71) Demandeur : **THOMSON-CSF
51, Esplanade du Général de Gaulle
F-92800 Puteaux (FR)**

(72) Inventeur : **Burel, Gilles
THOMSON-CSF, SCPI, Cédex 67
F-92045 Paris la Défense (FR)**

(74) Mandataire : **Benoit, Monique et al
THOMSON-CSF, SCPI, B.P. 329, 50, rue
Jean-Pierre Timbaud
F-92402 Courbevoie Cédex (FR)**

(54) **Procédé de connexion interne pour réseaux de neurones.**

(57) Procédé de connexion interne pour réseaux de neurones reliant des couches de neurones successives. Les états de sortie des neurones d'une nouvelle couche sont représentés par des fonctions obtenues suivant une première étape (21) en effectuant une sommation pondérée de fonctions représentant chacune l'état de sortie d'un neurone de la couche précédente, suivant une deuxième étape (22) en appliquant une fonction saturante au résultat de la sommation et suivant une troisième étape (23) en appliquant une fonction de distribution au résultat de la fonction saturante.
Application : traitement et analyse d'image, traitement du signal.

FIG. 2c

EP 0 533 540 A1

La présente invention concerne un procédé de connexion interne pour réseaux de neurones appliqué notamment à la prédiction ou à la réduction de la dimension des vecteurs d'observation dans les domaines du traitement et de l'analyse d'image par exemple. Plus généralement, elle s'applique aux techniques utilisant les structures multicouches modélisant des réseaux de neurones.

Depuis quelques années, un grand nombre de modèles de réseaux de neurones ont été proposés. Parmi ceux-ci, le modèle qui semble le plus intéressant pour les applications industrielles est le Perceptron Multicouches exposé notamment dans l'article de MM D.E. RUMELHART, G.E. HINTON et R.J. WILLIAMS "Learning internal representations by error back propagation" dans l'ouvrage "Parallel Distributed Processing" BRADFORD book - MIT Press 1986. Cette structure est un assemblage d'unités élémentaires appelées "neurones" ou "automates". Les neurones sont organisés en couches, chaque couche recevant à ses entrées les sorties de la couche précédente. Un algorithme d'apprentissage connu sous le terme de "rétropropagation du gradient" a été proposé pour ce type de réseau. Cet algorithme est présenté dans l'article cité ci-dessus.

Si les performances du Perceptron multicouches sont satisfaisantes pour les tâches de classification, il n'en est pas de même pour les tâches de prédiction ou de réduction de dimension des espaces de travail notamment. Dans ces domaines, les performances du Perceptron multicouche sont médiocres du fait de ses faibles capacités à traiter les problèmes non linéaires.

Le but de l'invention est de pallier les inconvénients précités. A cet effet, l'invention a pour objet un procédé de connexion interne pour réseaux de neurones reliant des couches de neurones successives, chaque couche recevant à ses entrées les sorties de la couche de rang directement inférieur, caractérisé en ce qu'il consiste à représenter les états de sortie des neurones par une fonction et à obtenir cette fonction suivant une première étape en effectuant une sommation pondérée de fonctions représentant chacune l'état de sortie d'un neurone de la couche précédente, suivant une deuxième étape en appliquant une fonction saturante au résultat de la sommation et suivant une troisième étape en appliquant une fonction de distribution au résultat de la fonction saturante.

L'invention a pour principaux avantages qu'elle permet d'accroître les capacités du Perceptron multicouches à traiter des problèmes non linéaires et d'améliorer notamment les performances de prédiction et de réduction de dimension de ce même Perceptron.

D'autres caractéristiques et avantages de l'invention apparaîtront à l'aide de la description qui suit en faite regard des dessins annexés qui représentent :

La figure 1a : une organisation de neurones en couches suivant la structure du Perceptron multicouches.
La figure 1b : un modèle de connexion de neurones.
La figure 2a : un modèle de connexion de neurones selon l'invention.
La figure 2b : des exemples de fonctions des répartitions scalaires distribuées.
La figure 3 : une segmentation d'une fonction de répartition scalaire distribuée.

La figure la montre une organisation de neurones en couches suivant la structure du Perceptron multicouches. Un vecteur d'entrée 1 fournit des informations à des unités d'entrée symbolisées par des flèches. Il n'y a pas de connexions à l'intérieur d'une même couche. Chaque neurone reçoit à ses entrées les sorties de la couche de rang directement inférieur. En général, un neurone dit de seuil, sans entrées, et dont la sortie vaut toujours 1, symbolisé par un triangle, est disposé sur chaque couche, sauf au niveau du vecteur de sortie 2, afin d'améliorer les capacités du réseau en rajoutant ainsi un degré de liberté.

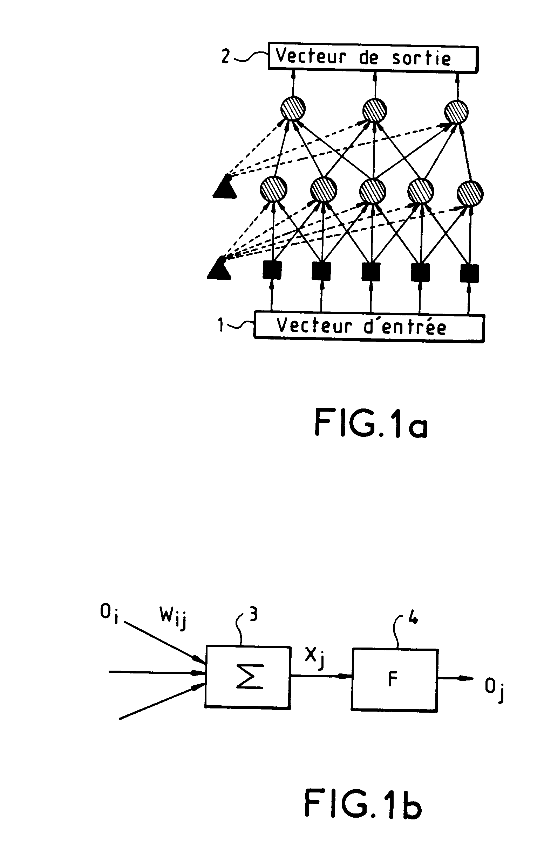

La figure 1b présente un mode de connexion de neurones associé à la structure du Perceptron multicouche et proposé par RUMELHART et al. Il est constitué d'un sommateur 3 et d'une fonction de transition 4 non linéaire de type tangente hyperbolique par exemple. $o_i$ est l'état de sortie d'un neurone i de la couche précédente, $o_j$ est l'état de sortie du neurone j appartenant à la couche suivante, les trois flèches en entrée du sommateur 3 symbolisent les connexions aux neurones de la couche précédente. $W_{ij}$ représente le coefficient de pondération associé à la connexion entre le neurone i et le neurone j. $X_j$, résultat de la somme pondérée 3 est appelé potentiel du neurone j. Si la fonction de transition 4 du neurone est notée F et l'ensemble des prédécesseurs du neurone j noté pred (j), conformément aux notations précédentes, il vient :

$$X_j = \sum_{i \in pred(j)} W_{ij} \; O_i \quad et \; O_j = F(X_j).$$

Le signe $\in$ indique l'appartenance.

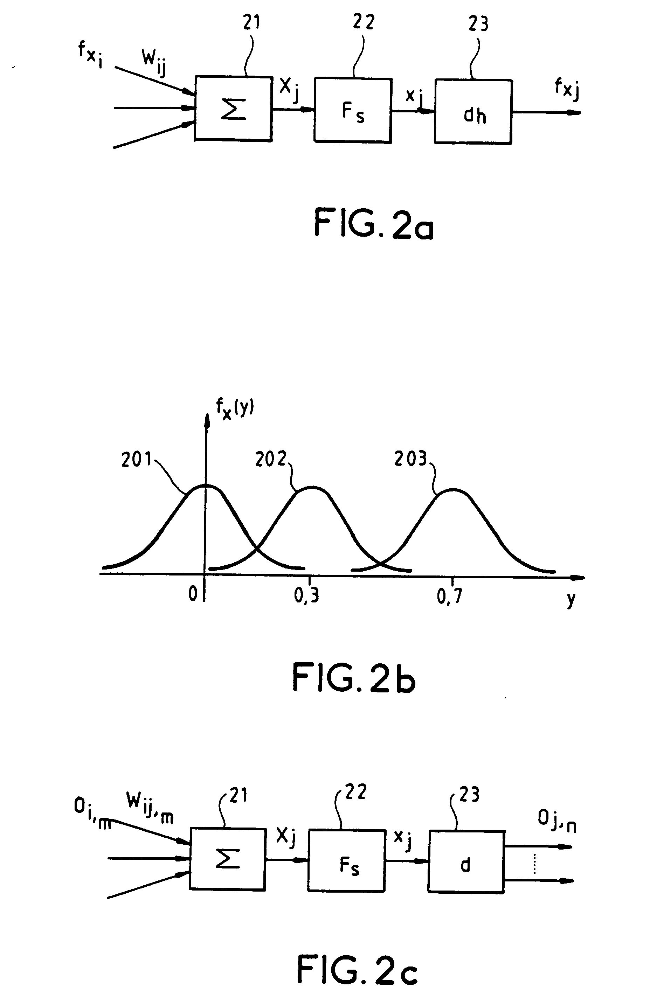

La figure 2a présente un modèle de connexion selon l'invention. Les états de sortie des neurones ne sont plus représentés par des scalaires comme précédemment mais par des fonctions. Le procédé de connexion selon l'invention consiste suivant une première étape 21 à effectuer la somme pondérée des fonctions $f_{xi}$ re-

présentant des neurones i de la couche précédente. Si la fonction $W_{ij}$ représente un continuum de poids caractérisant la connexion entre les neurones i et j, à l'issue de cette première étape 21, le potentiel $X_j$ associé au neurone j est obtenu par la relation :

$$X_j = \sum_{i \in pred(j)} \int_{-\infty}^{+\infty} W_{ij}(u) \; f_{xi}(u) \; du$$

préd (j) ayant été défini précédemment.

Suivant une deuxième étape 22, le résultat $X_j$ de cette somme pondérée passe dans une fonction saturante $F_s$ dont le résultat est noté $x_j$, $x_j = F_s(X_j)$, Fs peut être du type tangente hyperbolique par exemple, enfin suivant une troisième étape 23, à la valeur $x_j$ est appliquée une fonction de distribution $d_h$ afin d'obtenir la fonction de sortie caractérisant l'état en sortie du neurone j, cette fonction est notée $f_{xj}$. La fonction de distribution $d_h$ utilisée dans la troisième étape est une fonction injective de l'ensemble des nombres réels R vers l'ensemble des applications de R dans R qui a tout nombre réel x associe le résultat du produit de convolution de l'impulsion de Dirac centré en x notée $\delta_x$ par une fonction paire et apériodique notée h. Conformément aux notations précédentes, pour tout nombre réel x, il vient :

$$f_x = d_h(x) = \delta_x * h$$

où $\delta_x * h$ représente le produit de convolution de la fonction $\delta_x$ par la fonction h. Dans ce cas, pour tous nombres réels x et y,

$$f_x(y) = h(y - x) = h(x - y) \quad (1).$$

La fonction de distribution $d_h$ est donc entièrement déterminée par la connaissance de la fonction h. Par la suite, la fonction $f_x$ sera nommée "Représentation Scalaire Distribuée" de x. Dans la pratique, la fonction h peut être par exemple un filtre de lissage.

La figure 2b montre plusieurs représentations scalaires distribuées, dans le cas, par exemple, où h est une fonction d'allure gaussienne. L'axe y est l'ensemble de nombres réels, l'axe $f_x(y)$ est l'ensemble des images des nombres réels par la fonction $f_x$. La courbe 201 représente l'allure de la fonction $f_x$ pour x = 0, la courbe 202 l'allure de la fonction $f_x$ pour x = 0,3 et la courbe 203 l'allure pour la fonction $f_x$ pour x = 0,7.

Le fonctionnement du réseau selon l'invention sera mieux compris par l'étude suivante d'une connexion entre un neurone i et un neurone j. D'après l'expression du potentiel $X_j$, il est possible d'obtenir la relation :

$$X_j = \sum_{i \in pred(j)} s_{ij}(x_i) \quad (2)$$

avec

$$s_{ij}(x_i) = \int_{-\infty}^{+\infty} W_{ij}(u) \; f_{xi}(u) \; du$$

$$s_{ij}(x_i) = \int_{-\infty}^{+\infty} W_{ij}(u) \; h(x_i - u) \; du,$$

d'après la relation (1)

Cette dernière expression représente en fait le produit de convolution de la fonction h par la fonction $W_{ij}$ appliquée au nombre réel $x_i$, soit :

$$s_{ij}(x_i) = (h * W_{ij})(x_i) \quad (3)$$

Ainsi, en regroupant la fonction de distribution du neurone i avec le continuum de poids $W_{ij}$ caractérisant la connexion entre le neurone i et le neurone j, cette connexion apparaît comme le résultat du filtrage du continuum de poids par la fonction génératrice de la représentation scalaire distribuée. En notant $C_{ij} = h * W_{ij}$, il est possible de décrire les connexions aboutissant au neurone j par la succession d'opérations suivantes, conformément aux notations précédentes :

$$X_j = \sum_{i \in pred(j)} C_{ij}(x_i)$$

$$x_i = F_s(X_j)$$

Il est possible de rendre l'effet de la représentation scalaire distribuée en considérant que la connexion est une fonction adaptative et non plus un simple gain adaptatif comme dans le cas d'un modèle classique de neurone, ce qui permet de mieux répondre aux problèmes de non linéarité.

En pratique, il n'est néanmoins pas possible de représenter un continuum de poids. Selon l'invention, les poids sont donc représentés par une fonction, échantillonnée. Cette fonction échantillonnée est définie et notée de la manière suivante entre le neurone i et le neurone j :

$$W_{ij}{}^*(u) = \sum_{n=-\infty}^{+\infty} W_{ij,n} \; \delta(n-u)$$

où n est un nombre entier relatif. $W_{ij,n}$ est la valeur du continuum de poids $W_{ij}$ au point n, $\delta$ est la fonction de Dirac.

D'après la relation (3), conformément aux notations précédentes, la fonction $s_{ij}$ liant le potentiel $X_j$ d'un neurone j à la valeur $x_i$ d'un neurone i de la couche précédente est définie de la manière suivante :

$$s_{ij}(x_i) = (h * W_{ij} *)(x_i)$$

soit,

$$s_{ij}(x_i) = \int_{-\infty}^{+\infty} \left( \sum_{n=-\infty}^{+\infty} W_{ij,n} \, \delta(n-u) \right) f_{xi}(u) \, du$$

$W_{ij,n}$ étant constant :
  il vient :

$$s_{ij}(x_i) = \sum_{-\infty}^{+\infty} W_{ij,n} \int_{-\infty}^{+\infty} \delta(n-u) f_{xi}(u) \, du$$

en notant :

$$f_{xi,n} = \int_{-\infty}^{+\infty} \delta(n-u) f_{xi}(u) \, du \quad (4)$$

il vient :

$$s_{ij}(x_i) = \sum_{n=-\infty}^{+\infty} W_{ij,n} f_{xi,n} \quad (5)$$

Le modèle du neurone en échantillonné est représenté par la figure 2c. La fonction de sommation de l'étape 21, la fonction saturante de l'étape 22 et la fonction de distribution de l'étape 23 sont les mêmes que précédemment. n et m étant des entiers relatifs,

$$O_{j,n} = f_{xj,n} \text{ et } O_{i,n} = f_{xi,m}$$

$W_{ij,m}$ est la valeur du continuum de poids $W_{ij}$ à l'échantillonnage m. En sortie de l'étape 23, au lieu d'une seule flèche comme dans les cas précédents, figurent deux flèches séparées par des pointillés symbolisant les va-

**4**

leurs échantillonnées obtenues dont $O_{j,n}$ est une valeur particulière. L'amélioration de la connexion interne du réseau de neurone apparaît bien ici dans le fait que la sortie du neurone au lieu d'être représentée par une seule valeur, est représentée par une suite de valeurs échantillonnées apportant une meilleure précision et une meilleure adaptation aux différents traitements posés..

Comme le montre la figure 2b, la fonction de filtrage h est en général une fonction d'allure gaussienne ayant un écart type de faible valeur.

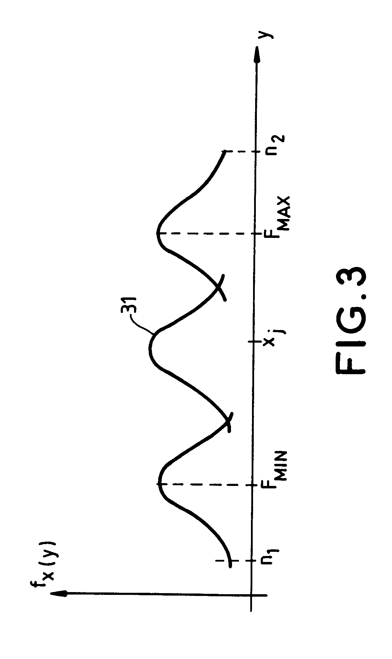

D'après la figure 3, il apparaît qu'en dehors de l'intervalle $[n_1, n_2]$, $f_x(y) = h(x-y) = h(y-x)$ a toujours une faible valeur et donc que les poids $W_{ij,n}$ d'indice n extérieur à l'intervalle $[n_1, n_2]$ ont peu d'influence dans le produit $W_{ij,n} f_{xi,n}$ de la relation (5). Pour les indices n extérieurs à cet intervalle $[n_1, n_2]$ les valeurs des poids $W_{ij,n}$ peuvent donc être fixées à 0. En pratique, les bornes de l'intervalle $[n_1, n_2]$ seront choisies de telle sorte qu'elles encadrent les valeurs asymptotiques de la fonction saturante Fs. Sur cette figure, $F_{MIN}$ et $F_{MAX}$ sont les valeurs de saturation ou asymptotiques basse et haute de la fonction saturante Fs, pour la fonction tangente hyperbolique par exemple, $F_{MIN} = -1$ et $F_{MAX} = +1$. Conformément aux notations précédemment établies, il vient :

$$s_{ij}(x_i) = \sum_{n=n1}^{n2} W_{ij,n} O_{i,n} \quad (6)$$

Une fois le modèle de connexion établi, il faut définir un algorithme d'apprentissage. La phase d'apprentissage est nécessaire pour que, quelque soit l'entrée du réseau, les états des neurones desortie soient adaptés à cette entrée. L'algorithme d'apprentissage défini selon l'invention est un algorithme de gradient, inspiré de l'algorithme de rétropropagation. Ce dernier est exposé dans l'article de RUMELHART et al précédemment cité.

Dans l'algorithme d'apprentissage défini selon l'invention, une erreur quadratique moyenne $e_{QM}$ est définie par exemple entre les sorties obtenues $(x_j)$ et les sorties souhaitées $(t_j)$ :

$$e_{QM} = E\{e_Q\}$$

L'opérateur $E\{\}$ calcule la valeur moyenne des valeurs $e_Q$ définies par :

$$e_Q = \frac{1}{2} \sum_{j \in s} (x_j - t_j)^2 \quad (7)$$

s étant l'ensemble des indices de neurones de sortie.

Lors de la phase d'apprentissage, tous les exemples sont présentés plusieurs fois dans un ordre aléatoire. A chaque présentation d'un exemple, les poids $W_{ij,n}$ varient dans le sens inverse du gradient de l'erreur, soit $W_{ij,n}$ cette variation : $\Delta W_{ij,n} = -\alpha \frac{\partial e_{QM}}{\partial W_{ij,n}}$, $\alpha$ étant une constante positive, une diminution de l'erreur est ainsi assurée. Le gradient local de l'erreur quadratique sera noté par la suite $g_{ij,n}$.

$$g_{ij,n} = \frac{\partial e_Q}{\partial W_{ij,n}}$$

Comme $e_{QM} = E\{eQ\}$, il est possible d'écrire :

$$\Delta W_{ij,n} = -\alpha E\left\{\frac{\partial e_Q}{\partial W_{ij,n}}\right\}$$

car la dérivation est un opérateur linéaire. En conséquence, il vient :

$$\Delta W_{ij,n} = -\alpha E\{g_{ij,n}\}$$

La réalisation de la phase d'apprentissage nécessite donc de connaître les gradients $g_{ij,n}$ de l'erreur par rapport à un poids :

$$g_{ij,n} = \frac{\partial e_Q}{\partial W_{ij,n}} = \frac{\partial e_Q}{\partial X_j} \frac{\partial X_j}{\partial W_{ij,m}}$$

or,

$$\frac{\partial X_j}{\partial W_{ij,n}} = O_{i,n}$$

d'après les relations (2) et (6)

Ainsi, en posant

$$\delta_j = - \frac{\partial e_Q}{\partial X_j},$$

$$g_{ij,n} = - \delta_j O_{i,n}$$

Pour obtenir $g_{ij,n}$ il reste à définir $\delta j$. En utilisant les règles élémentaires du calcul différentiel, il apparaît que $\delta j$ s'exprime en fonction des termes :

$$\delta_k = - \frac{\partial e_Q}{\partial X_K}$$

relatifs aux neurones k de la couche suivante. En effet :

$$\delta_j = \frac{\partial e_Q}{\partial X_j} = - \frac{\partial e_Q}{\partial x_j} \frac{\partial x_j}{\partial X_j}$$

$$x_j = F_s(X_j) \text{donc} \frac{\partial x_j}{\partial X_j} = F'_s(X_j)$$

et

$$\delta_j = - \frac{\partial e_Q}{\partial x_j} F'_s(X_j)$$

$\frac{\partial e_Q}{\partial x_j}$ peut s'écrire

$$\frac{\partial e_Q}{\partial x_j} = \sum_{n=n_1}^{n_2} \frac{\partial e_Q}{\partial O_{j,n}} \frac{\partial O_{j,n}}{\partial xj} \quad ,$$

$[n_1, n_2]$ étant l'intervalle défini précédemment.

$\frac{\partial e_Q}{\partial O_{j,n}}$ peut s'écrire

$$\frac{\partial e_Q}{\partial O_{j,n}} = \sum_{k=succ(j)} \frac{\partial e_Q}{\partial X_k} \frac{\partial X_k}{\partial O_{j,n}} ,$$

succ (j) étant les indices des neurones de la couche succédant directement à la couche où se situe le neurone

$$j \frac{\partial e_Q}{\partial O_{j,n}} = \sum_{k=succ(j)} - \delta_k W_{jk,n}$$

puisque $\frac{\partial e_Q}{\partial X_k} = - \delta k$ et $\frac{\partial X_k}{\partial O_{j,n}} = W_{ik,n}$ d'après les relations (2) et (6). Par ailleurs, $\frac{\partial O_{j,n}}{\partial xj} = h'(x_j - n)$. En effet, $O_{j,n} = fx_{j,n}$ et d'après les relations (1) et (4) $\frac{\partial f_{xj}}{\partial x_j} = h'(x_j - n)$ d'où l'expression de $\delta j$ suivante exprimée en fonction des $\delta k$ relatifs aux neurones k de la couche suivante :

$$\delta_j = \left[ \sum_{n=n1}^{n2} \left( \sum_{k=succ(j)} \delta_k W_{jk,n} \right) h'(xj-n) \right] F_{\S}'(X_j)$$

Dans le cas particulier de la dernière couche, δj s'exprime aisément en fonction du type d'erreur choisi, en effet :

$\delta_j = -\dfrac{\partial e_Q}{\partial x_j} \dfrac{\partial x_j}{\partial X_j}$ or, d'après la relation (7), pour les neurones j appartenant à la dernière couche $\dfrac{\partial e_Q}{\partial x_j} = (xj - tj)$.

En conséquence $\delta_j = -(xj - tj) F'_s (Xj)$

Ainsi, par itération et à partir des erreurs quadratiques successives entre les sorties obtenues et les sorties souhaitées, les coefficients $W_{lj,n}$ peuvent être déterminés, cela constitue la phase d'apprentissage.

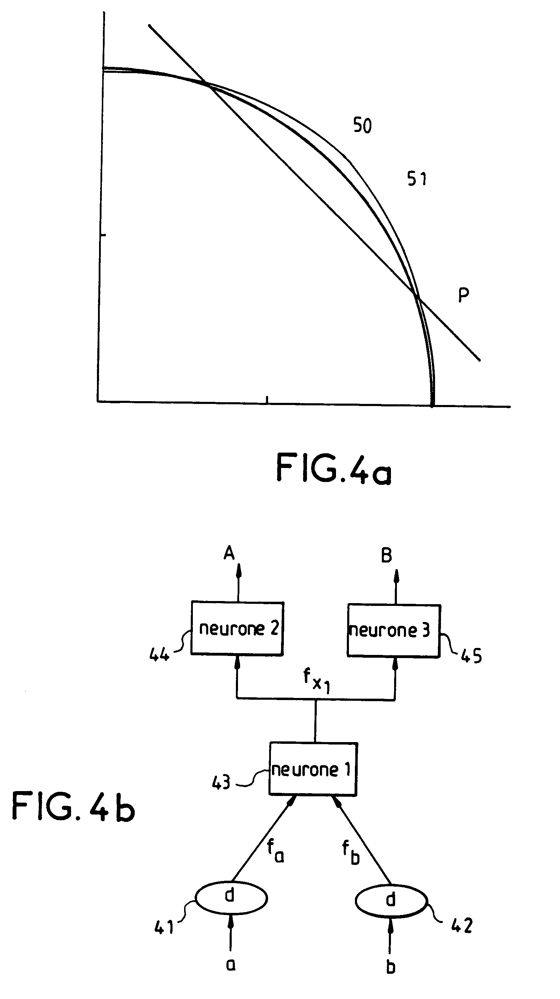

Le procédé selon l'invention peut être avantageusement appliqué à la réduction de la dimension des espaces de travail notamment dans le domaine du traitement du signal par exemple. En effet, dans de nombreuses applications de traitement du signal, l'observation est représentée par un vecteur appartenant à un espace de dimension N. Très souvent, les composantes de ce vecteur ne sont pas indépendantes et sont en réalité restreintes à une hyper-surface de dimension M inférieur à N. Certaines méthodes d'analyse permettent d'approximer cette hyper-surface par un hyper plan. Néanmoins, quand l'hyper-surface est fortement courbée, l'approximation par un hyperplan n'est pas satisfaisante. Il n'existe pas actuellement de méthode satisfaisante. Le procédé selon l'invention permet d'obtenir des résultats satisfaisants. L'exemple qui suit est traité en dimension 2 mais est représentatif de tout autre problème traité en dimension supérieure. Sur la figure 4a, l'hyper-surface S est représentée par un quart de cercle de rayon égal à l'unité.

Les données traitées sont des données synthétiques représentés par des vecteurs de coordonnées (a, b) aléatoirement choisies sur le quart de cercle S selon une loi uniforme en fonction de l'angle par exemple. La figure 4b montre le réseau de neurones utilisé selon l'invention. a et b sont les données d'entrée. Les fonctions d 41 et 42 sont les fonctions de distribution donnant les fonctions de représentation scalaire distribuée $f_a$ et $f_b$ définies selon la relation (1), les neurones 43, 44 et 45 sont connectés conformément au procédé selon l'invention. La fonction $f_{x1}$ est la fonction de représentation scalaire distribuée représentant l'état du neurone 1 43. A et B sont les valeurs obtenues en sortie du réseau. Lors de la phase d'apprentissage, le réseau est établi par une méthode d'auto-association, c'est à dire que les données souhaitées en sorties du réseau sont égales aux données présentes à l'entrée du réseau ; dans ce cas, si a et b sont les données d'entrée, A et B les données de sortie obtenues, l'erreur quadratique $e_Q$ est donnée par la relation suivante :

$$e_Q = \frac{1}{2}[(A-a)^2 + (B-b)^2].$$

Comme dans ce réseau, toute l'information doit passer par le neurone 1 43, le problème à traiter est réduit à un espace de travail de dimension 1 et cela avec un résultat satisfaisant puisque le tracé des coordonnées de sortie (A , B) obtenu représenté par la courbe S1 de la figure 4a approxime de façon satisfaisante la courbe S des coordonnées de sortie souhaitées. Une autre solution qui consiste à traiter ces données avec un réseau de neurones classique et non plus connecté selon l'invention, tout en réduisant la dimension à 1, fournit une approximation représentée par la droite P.

Le procédé selon l'invention peut aussi être utilisé dans le domaine de la prédiction où il améliore grandement les performances. Les bons résultats obtenus par ce procédé dans le traitement des problèmes non linéaires sont principalement dus au fait que les connexions se comportent comme des fonctions adaptatives et non plus comme de simples gains adaptatifs. Par exemple, la fonction de lissage h de la relation (1) utilisée pour définir la fonction de distribution peut être définie par la fonction gaussienne :

$$h(u) = \frac{1}{\sqrt{2\pi}\sigma} e^{-\frac{u^2}{2\sigma^2}}$$

et adaptée selon les problèmes à traiter en jouant sur l'écart type $\sigma$ qui est en général de l'ordre de l'unité.

**Revendications**

1.  Procédé de connexion interne pour réseaux de neurones reliant des couches de neurones successives, chaque couche recevant à ses entrées les sorties de la couche de rang directement inférieur, caractérisé en ce qu'il consiste à représenter les états de sortie des neurones par une fonction et à obtenir cette fonction suivant une première étape (21) en effectuant une sommation pondérée de fonctions représentant chacune l'Etat de sortie d'un neurone de la couche précédente, suivant une deuxième étape (22) en appliquant une fonction saturante au résultat de la sommation et suivant une troisième étape (23) en appliquant une fonction de distribution au résultat de la fonction saturante.

2. Procédé selon la revendication 1 caractérisé en ce que la fonction de distribution (23) transforme chaque nombre réel x obtenu à la fin de la deuxième étape (22) en une fonction qui est le produit de convolution d'une fonction de filtre de lissage par l'impulsion de Dirac centrée sur ledit nombre réel x.

3. Procédé selon la revendication 2 caractérisé en ce que la fonction de filtre de lissage a une allure gaussienne (31).

4. Procédé selon la revendication 1 caractérisé en ce que les poids de la sommation pondérée (21) sont représentés par une fonction échantillonnée.

5. Procédé selon les revendications 1 et 4 caractérisé en ce que les poids échantillonnés de la fonction de sommation sont nuls en dehors d'un intervalle encadrant les valeurs asymptotiques de la fonction saturante.

6. Procédé selon les revendications 1 et 5 caractérisé en ce que la fonction saturante est une tangente hyperbolique.

7. Procédé selon l'une quelconque des revendications précédentes caractérisé en ce que la fonction representant l'état de sortie d'un neurone est échantillonnée.

8. Procédé selon l'une quelconque des revendications précédentes caractérisé en ce que les connexions des réseaux de neurones sont établis lors d'une phase d'apprentissage selon un algorithme de gradient.

FIG.1a

FIG.1b

FIG. 2a

FIG. 2b

FIG. 2c

FIG.3

EP 0 533 540 A1

FIG.4a

FIG.4b

Office européen
des brevets

**RAPPORT DE RECHERCHE EUROPEENNE**

Numero de la demande

EP   92 40 2490

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | IJCNN INTERNATIONAL JOINT CONFERENCE ON NEURAL NETWORKS.<br>vol. II, 1990, IEEE, NEW YORK, US<br>pages 599 - 609<br>MIAN ET AL. 'Convergence properties of a pulsed neural network'<br>* page 603 - page 605; figures 3,4 *<br><br>----- | 1,4-8 | G06G7/60 |
| | | | **DOMAINES TECHNIQUES RECHERCHES (Int. Cl.5 )** |
| | | | G06G<br>G06F |

Le présent rapport a été établi pour toutes les revendications

| Lieu de la recherche | Date d'achèvement de la recherche | Examinateur |
|---|---|---|
| LA HAYE | 16 DECEMBRE 1992 | LEDRUT P. |